# EUROPÄISCHE PATENTANMELDUNG

(11) **EP 1 580 629 A1**
(43) Veröffentlichungstag der Anmeldung: **28.09.2005**
(21) Anmeldenummer: 05405256.8
(22) Anmeldetag: 22.03.2005
(51) Int. Cl.: G05B 19/04

(54) **Werkzeugmaschine**

(30) Priorität: 26.03.2004 EP 04405186
(71) Anmelder: H.A. SCHLATTER AG, Zürich (CH)
(72) Erfinder: Iberg, Ernst, 5503 Schafisheim (CH); Giacomini, Fabio, 8953 Dietikon (CH)
(74) Vertreter: Roshardt, Werner Alfred

(57) **Zusammenfassung**

Eine Werkzeugmaschine umfasst ein Werkzeug (40), insbesondere ein Schweiss- oder anderes Fügewerkzeug, zum sequenziellen Bearbeiten von Werkstücken während einer Bearbeitungsphase, eine Schnittstelle (34) mit einer Mehrzahl von, insbesondere digitalen, Ein- und Ausgängen und eine Steuerung (10, 20, 30) zum Steuern des Werkzeugs (40) während der Bearbeitungsphase, abhängig von einem durch den Benutzer veränderbaren Laufzeitprogramm. Die Werkzeugmaschine umfasst weiter eine Werkstücklehre mit automatisch ansteuerbaren Komponenten (52.1, 52.2, 52.3, 52.4, 52.5), welche an die Schnittstelle (34) anschliessbar sind. Mittels der Werkstücklehre können in einem entsprechenden Bereich der Werkzeugmaschine befindliche Werkstücke eingespannt und/oder positioniert und/oder überwacht werden. Die Steuerung (10, 20, 30) ist derart ausgebildet, dass sie die Schnittstelle (34) durch ein Systemprogramm (304) unabhängig vom Laufzeitprogramm kontrollieren kann, wozu das Systemprogramm (304) eine Mehrzahl von vorgegebenen Routinen umfasst, durch welche die Ein- und Ausgänge der Schnittstelle (34) beliebig ansteuerbar sind. Die Steuerung (10, 20, 30) ist weiter derart ausgebildet, dass gewünschte Funktionalitäten der Komponenten (52.1, 52.2, 52.3, 52.4, 52.5) der Werkstücklehre durch den Benutzer vor der Bearbeitungsphase angebbar sind, ohne dass dazu eine Änderung des Systemprogramms erforderlich ist, wobei während der Bearbeitungsphase jene Routinen des Systemprogramms automatisch abgearbeitet werden, welche die gewünschten Funktionalitäten bereitstellen.

## Beschreibung

### Technisches Gebiet

Die Erfindung betrifft eine Werkzeugmaschine mit einem Werkzeug, insbesondere einem Schweiss- oder anderen Fügewerkzeug, zum sequenziellen Bearbeiten von Werkstücken während einer Bearbeitungsphase, mit einer Schnittstelle mit einer Mehrzahl von, insbesondere digitalen, Ein- und Ausgängen und mit einer Steuerung zum Steuern des Werkzeugs während der Bearbeitungsphase, abhängig von einem durch den Benutzer veränderbaren Laufzeitprogramm. Weiter betrifft die Erfindung eine Steuervorrichtung für eine derartige Werkzeugmaschine, ein Steuerungsprogrammprodukt sowie ein Verfahren zum Betreiben einer Werkzeugmaschine.

### Stand der Technik

Automatisierte Werkzeugmaschinen sind weit verbreitet, gerade auch im Bereich von Schweiss- und anderen Fügeprozessen. Sie ermöglichen die automatische Ausführung komplexer Bearbeitungsoperationen, welche durch ein vom Benutzer modifizierbares Laufzeitprogramm vorgegeben werden. Derartige Steuerprogramme werden oft von einer sogenannten NC/CNC-Steuerung (computerized numerical control) verarbeitet. NC-Programme sind relativ einfach aufgebaut und bis zu einem gewissen Grad standardisiert, so dass sie vom Endbenutzer der Werkzeugmaschine mittels einer angepassten Benutzeroberfläche selbst erstellt oder modifiziert werden können, um die gewünschte Bearbeitung des Werkstücks vorzugeben. Der Benutzer der Werkzeugmaschine muss dazu nicht ein komplexes und maschinenabhängiges Systemprogramm anpassen, welches auf einer tieferen Ebene, z. B. im Rahmen einer speicherprogrammierbaren Steuerung (SPS, PLC), abläuft.

Allerdings können gewisse Funktionen, welche nicht in direktem Zusammenhang mit dem CNC-gesteuerten Werkzeug stehen, nur schwer im Rahmen solcher Werkzeugmaschinen automatisiert werden. Dazu gehören insbesondere das Einspannen, Positionieren oder Überwachen der Werkstücke vor, während und nach dem eigentlichen Bearbeitungsvorgang. Im Rahmen der CNC-Technologie sind derartige Funktionen nur möglich, wenn sie der Maschinenhersteller explizit vorsieht. Soll eine Werkzeugmaschine also solche Zusatzaufgaben erledigen, müssen diese bereits bei der Beschaffung der Maschine spezifiziert und vom Maschinenhersteller individuell implementiert werden, insbesondere indem das Systemprogramm angepasst wird. Wird das Bearbeitungsverfahren angepasst, ist wiederum Fachpersonal des Maschinenherstellers notwendig, um die Anpassungen auf Maschinenebene vorzunehmen. Dies führt zu erheblichen Kosten und einem erheblichen Zeitaufwand, so dass die Flexibilität der Werkzeugmaschine in Bezug auf solche Zusatzfunktionen erheblich geschmälert ist. In der Praxis werden derartige Zusatzfunktionen aus den genannten Gründen oft weiterhin mit manueller Unterstützung realisiert.

### Darstellung der Erfindung

Aufgabe der Erfindung ist es, eine dem eingangs genannten technischen Gebiet zugehörende Werkzeugmaschine zu schaffen, welche eine flexible und einfach anpassbare automatische Steuerung von Zusatzfunktionen, insbesondere im Bezug auf das Einspannen, Positionieren oder Überwachen der Werkstücke, ermöglicht.

Die Lösung der Aufgabe ist durch die Merkmale des Anspruchs 1 definiert. Gemäss der Erfindung umfasst die Werkzeugmaschine eine Werkstücklehre mit automatisch ansteuerbaren Komponenten, welche an die Schnittstelle anschliessbar sind. Mittels dieser Werkstücklehre können in einem entsprechenden Bereich der Werkzeugmaschine befindliche Werkstücke eingespannt und/oder positioniert und/oder überwacht werden. Die Steuerung der Werkzeugmaschine ist derart ausgebildet, dass sie die Schnittstelle durch ein Systemprogramm unabhängig vom Laufzeitprogramm kontrollieren kann, wozu das Systemprogramm eine Mehrzahl von vor-gegebenen Routinen umfasst, durch welche die Ein- und Ausgänge der Schnittstelle beliebig ansteuerbar sind. Weiter ist die Steuerung derart ausgebildet, dass gewünschte Funktionalitäten der Komponenten der Werkstücklehre durch den Benutzer vor der Bearbeitungsphase angebbar sind, ohne dass dazu eine Änderung des Systemprogramms erforderlich ist, wobei während der Bearbeitungsphase jene Routinen des Systemprogramms automatisch abgearbeitet werden, welche die gewünschten Funktionalitäten bereitstellen.

Das Systemprogramm umfasst also von vornherein alle notwendigen Routinen, welche für das beliebige Ansteuern der Ein- und Ausgänge der Schnittstelle notwendig sind. Diese müssen nicht bedarfsweise vom Maschinenhersteller bereitgestellt oder verfügbar gemacht werden. Weil die Schnittstelle beliebig ansteuerbar ist, lassen sich sämtliche gewünschten Funktionalitäten realisieren, vorausgesetzt diese können durch automatisch ansteuerbare Komponenten ausgeführt werden, die sich durch die genannten Ein- und Ausgänge der Schnittstelle steuern und/oder abfragen lassen. Die Funktionalitäten werden durch den Benutzer vor dem Beginn der Bearbeitungsphase angegeben, wobei keine Anpassung, Änderung oder Ergänzung des Systemprogramms notwendig ist. Während der Bearbeitungsphase werden dann jene im Systemprogramm enthaltenen Routinen automatisch abgearbeitet, welche die automatisch ansteuerbaren Komponenten derart ansprechen, dass diese sich den gewünschten Funktionalitäten entsprechend verhalten. Neben den genannten Komponenten der Werkstücklehre können auch weitere Komponente angeschlossen und im Rahmen der vorgebbaren Funktionalitäten angesteuert werden, z. B. Lampen oder Anzeigen, welche über den aktuellen Betriebszustand oder Störungen der Maschine oder der Werkstücklehre informieren.

Durch die vorgegebenen Routinen wird also die Flexibilität der Werkzeugmaschine in Bezug auf die Zusatzfunktionen erheblich gesteigert. Die Funktionalitäten können zudem vom Endbenutzer auf einfache Art und Weise vorgegeben werden, ohne dass in das Systemprogramm eingegriffen werden muss.

Bevorzugt ist die Steuerung derart ausgebildet, dass sie einmalig vor der Bearbeitungsphase ein vom Benutzer veränderbares Initialisierungsprogramm durchläuft. Die gewünschten Funktionalitäten der Komponenten der Werkstücklehre werden durch den Benutzer im Initialisierungsprogramm angegeben. Durch eine Anpassung des Initialisierungsprogramms können somit die Funktionalitäten angepasst, verändert oder erweitert werden. Vor der nächsten Bearbeitungsphase wird das Initialisierungsprogramm einmal durchlaufen, wodurch die neuen Funktionalitäten bereitgestellt werden. Weil das Initialisierungsprogramm jeweils nur ausserhalb der Bearbeitungsphase abläuft, kann durch eine Anpassung der Funktionalitäten nicht ein laufender Bearbeitungsprozess gestört werden. Weil es vor jeder Bearbeitungsphase durchlaufen wird, werden die geänderten Funktionalitäten zuverlässig initialisiert. Die Initialisierung der Funktionalitäten verläuft zudem in einer für die Benutzer gewohnten Weise in Form eines Programms. Dadurch kann der Einführungsaufwand minimiert werden.

Alternativ können die Funktionalitäten beispielsweise in einer gesonderten Datenbank angegeben und manuell oder periodisch, zwischen zwei Bearbeitungsphasen oder in Bearbeitungspausen, aktualisiert werden.

Mit Vorteil wird das Initialisierungsprogramm in einem Grundstellungsprogramm zum Initialisieren einer Grundstellung der Werkzeugmaschine vorgegeben. Derartige Grundstellungsprogramme sind bei automatisierten Werkzeugmaschinen üblich. Sie dienen dazu, den Bearbeitungsvorgang vorzubereiten, unter anderem indem das Bearbeitungswerkzeug in eine vorgegebene Stellung verfahren wird. Weil derartige Grundstellungsprogramme ohnehin im Rahmen der Werkzeugsteuerung vorgesehen sind und automatisch vor jeder Bearbeitungsphase durchlaufen werden, eignen sie sich ideal dazu, auch das Initialisierungsprogramm für die Zusatzfunktionalitäten aufzunehmen.

Alternativ kann das Initialisierungsprogramm separat vom Grundstellungsprogramm vorgegeben und vor der Bearbeitungsphase abgearbeitet werden.

Die Erfindung lässt sich insbesondere bei einer Werkzeugmaschine implementieren, bei welcher das Systemprogramm auf SPS-Basis und das Laufzeitprogramm auf NC-Basis funktionieren. In diesem Fall funktioniert bevorzugt auch das Initialisierungsprogramm auf NC-Basis, wobei ein NC-Befehlssatz eingesetzt wird, welcher zum Angeben der gewünschten Funktionalitäten erweitert ist. Die Kombination NC/SPS ist weit verbreitet. Möglichkeiten zur Erweiterung des NC-Befehlssatzes bestehen, bisher werden werkzeugspezifische Erweiterungen beispielsweise durch sogenannte M-Codes im NC-Laufzeitprogramm aufgerufen. Die erfindungsgemässen Erweiterungen können für den Benutzer auf dieselbe Art und Weise verfügbar gemacht werden. Der Endbenutzer arbeitet bei der Anpassung, Erweiterung oder Änderung der Funktionalitäten ausschliesslich auf NC-Ebene. Änderungen im SPS-Systemprogramm sind nicht notwendig.

Alternativ ist die Erfindung auch mit anderen derzeitigen oder zukünftigen Steuersprachen realisierbar, insbesondere in Systemen mit einer einfach modifizierbaren Steuersprache auf Laufzeitebene und einer komplexeren Maschinensprache auf Systemebene.

Vorzugsweise umfassen die möglichen Funktionalitäten mehrstufige Abfolgen von Operationen der automatisch ansteuerbaren Komponenten. Die Operationen werden hintereinander ausgeführt, wobei eine nächste Operation erst dann startet, wenn die vorhergehende erfolgreich ausgeführt worden ist. Dadurch lassen sich komplexe Funktionalitäten auf einfache Weise realisieren.

Mit Vorteil umfasst die Werkzeugmaschine eine Mehrzahl von Bereichen zum Einspannen und/oder Positionieren der Werkstücke, welche wahlweise in einem Arbeitsbereich des Werkzeugs positionierbar sind. Die nicht im Arbeitsbereich positionierten Bereiche können mit einem Werkstück be- bzw. entladen werden. Dort kann das Werkstück auch für die Bearbeitung vorbereitet, beispielsweise passend positioniert werden. Auch eine manuelle Bearbeitung oder eine Bearbeitung durch eine andere Werkzeugmaschine ist in diesen Bereichen möglich. Gegenüber Werkzeugmaschinen mit lediglich einem Arbeitsbereich können deshalb komplexere Bearbeitungsprozesse durchgeführt werden und gleichzeitig Totzeiten, beispielsweise beim Wechseln des Werkstücks, vermieden werden.

Alternativ ist bei einfachen Werkzeugmaschinen nur ein einziger Bereich vorhanden, in welchem das Werkstück gehalten ist und vom Werkzeug bearbeitet werden kann.

Bevorzugt ist die Steuerung derart ausgebildet, dass für jede Funktion der gewünschten Funktionalitäten angebbar ist, ob sie nach einem Positionieren eines betroffenen Bereichs in einer bestimmten Position, vor einem Bewegen in eine andere Position, nach einer manuellen Aktion einer Bedienperson oder als Folge eines externen Auslöseimpulses durchgeführt werden soll. Externe Auslöseimpulse können beispielsweise durch in dem betroffenen oder anderen Bereichen positionierte Sensoren oder durch die zentrale Maschinensteuerung generiert werden. Die Koppelung der Auslösung von Funktionalitäten an die Position des betroffenen Bereichs ermöglicht eine einfache Definition dieser Funktionalitäten, denn auf diese Weise erübrigt sich die Angabe eines genauen Zeitpunkts oder von anderen Bedingungen, welche zur Auslösung erfüllt sein müssen. Weil derartige Funktionalitäten nicht an einen externen Zeitgeber gekoppelt sind, ist zudem ein flexibler und effizienter Betrieb der Werkzeugmaschine ermöglicht. Die Funktionalitäten werden nämlich stets dann ausgelöst, wenn sie benötigt werden. Ein systemweiter Takt ist nicht notwendig. Eine Verzögerung in der Positionierung der Bereiche führt damit nicht zu Störungen im Verfahrensablauf. Die Steuerung kann überdies so realisiert sein, dass auch während des Positionierens der Bereiche noch Funktionalitäten stattfinden, dass beispielsweise das Werkstück während der Bewegung für den nächsten Bearbeitungsschritt in der nächsten Position ausgerichtet wird. Dadurch wird eine maximale Verfahrenseffizienz erreicht.

Alternativ wird die Auslösung der Funktionalitäten beispielsweise lediglich an die Positionierung der Bereiche in einer neuen Position gekoppelt, worauf die einzelnen Operationen nacheinander ablaufen, bis auch jene Operationen abgeschlossen sind, welche das Werkstück für die Positionierung des Bereichs in der nächsten Position vorbereiten.

Mit Vorteil sind für Einspann- und/oder Positionier- und/oder Überwachungsfunktionen im Zusammenhang mit der Bearbeitung eines der Werkstücke durch das Werkzeug die Routinen zum Ansteuern der Ein- und Ausgänge der beteiligten Komponenten auch im Laufzeitprogramm aufrufbar. Dadurch können die entsprechenden Funktionalitäten mit den Bearbeitungsfunktionen durch das im Laufzeitprogramm gesteuerte Werkzeug optimal synchronisiert werden. Die Komponenten und das Werkzeug können abwechselnd Verfahrensschritte ausführen, wodurch komplexere Bearbeitungsverfahren ermöglicht werden, ohne dass ein aufwändiger konstruiertes Werkzeug benötigt wird.

Alternativ werden die auszuführenden Routinen ausschliesslich im Initialisierungsprogramm vorgegeben. Der Prozess ist in diesem Fall so geplant, dass vor der Bearbeitungsoperation durch das Werkzeug zunächst diejenigen Routinen automatisch aufgerufen werden, welche dafür sorgen, dass das Werkstück für die Bearbeitungsoperation vorbereitet wird. Die Kontrolle wird dann vom NC-Programm übernommen, welches das Werkzeug während der eigentlichen Bearbeitung steuert. Sobald die Bearbeitungsoperation abgeschlossen ist, werden automatisch die weiteren Routinen ausgelöst, welche das Werkstück für den Weitertransport vorbereiten.

Mit Vorteil ist zumindest einer der Bereiche in mehrere Unterbereiche aufgeteilt, wobei dem Bereich und jedem Unterbereich je mehrere Ein- und/oder Ausgänge der Schnittstelle zugeordnet sind. Dadurch lässt sich die Adressierung der einzelnen Ein- und Ausgänge vereinfachen. Eine derartige Unterteilung ermöglicht zudem die Ansteuerung einer grösseren Anzahl von Ein- und Ausgängen bei bestehenden SPS-basierten Systemen mit einem vorgegebenen Adressbereich. Schliesslich können Funktionalitäten unabhängig vom einzelnen Bereich bzw. Unterbereich vergeben werden, so dass Funktionalitäten, die in allen Bereichen gleichartig sind, nicht separat initialisiert werden müssen.

Alternativ ist jeder Ein- oder Ausgang individuell durch eine eindeutige Adresse ansteuerbar.

Mit Vorteil weist die Werkzeugmaschine einen drehbaren Tisch auf, auf welchem die Bereiche ausgebildet sind. Dadurch wird auf einfache Weise ein zyklischer Betrieb mit einer Arbeitsposition sowie einer oder mehreren Belade-, Entlade- oder Vorbereitungspositionen ermöglicht. Die Zahl der Bereiche und der Positionen kann abhängig von dem auszuführenden Bearbeitungsverfahren frei gewählt werden.

Alternativ kann ein hin und her verschiebbarer Tisch vorgesehen werden oder aber ein fester Arbeitstisch. Im letzten Fall kann das Werkzeug von einer Position zu einer anderen verschiebbar sein.

Mit Vorteil sind die Schnittstelle und die Steuerung derart ausgebildet, dass vom Werkzeug unabhängige, im Bereich zum Einspannen und/oder Positionieren und/oder Überwachen der Werkstücke angeordnete Zusatzwerkzeuge zum Bearbeiten der Werkstücke anschliessbar sind. Die Zusatzwerkzeuge können neben dem eigentlichen Werkzeug der Werkzeugmaschine zusätzliche Bearbeitungsoperationen durchführen, und zwar sowohl im Arbeitsbereich des Hauptwerkzeugs als auch in anderen Bereichen. Die Zusatzwerkzeuge sind auf dieselbe Weise wie die Komponenten der Werkstücklehre automatisch ansteuerbar. Falls vorgesehen, können sie für Operationen im Zusammenhang mit der Bearbeitung durch das Werkzeug auch durch das Laufzeitprogramm angesteuert werden.

Bevorzugt umfasst die Schnittstelle ein Bussystem zum Bereitstellen der Ein- und Ausgänge. Dadurch wird die Verkabelung von der Schnittstelle zu den automatisch ansteuerbaren Komponenten erheblich vereinfacht und flexibilisiert. Beispielsweise ist für jeden Bereich oder Unterbereich ein Anschlussmodul vorgesehen mit einer vorgegebenen Anzahl von Anschlüssen für die Komponenten. Jedes dieser Anschlussmodule wird von der Schnittstelle durch nur je ein Buskabel versorgt. Werden zusätzliche Anschlüsse benötigt, können die Anschlussmodule erweitert oder zusätzliche Module vorgesehen werden.

Alternativ können die Komponenten sternartig mit der zentralen Steuerung verbunden sein.

Vorzugsweise umfasst das Systemprogramm Routinen, welche eine Überwachung eines Zustands einer der Komponenten der Werkstücklehre auslösen, wobei ein steuerungsmässig nicht zulässiger Zustand durch eine Bedienperson korrigierbar ist, so dass anschliessend das Systemprogramm für die betroffene Funktionalität fortgesetzt werden kann. Beim Auftreten eines steuerungsmässig nicht zulässigen Zustandes wird die Bedienperson informiert. Diese muss lediglich den nicht zulässigen Zustand korrigieren und die erfolgte Korrektur quittieren. Daraufhin wird das Systemprogramm fortgesetzt. Dadurch werden Fehler während der Bearbeitungsphase aufgefangen, ohne dass der gesamte Prozess unterbrochen oder gar neu gestartet werden muss. Vom nicht zulässigen Zustand und der nachfolgenden Korrektur ist nur der lokale Bereich der Maschine betroffen.

Insbesondere bei der Entwicklung des Laufzeitprogramms, der (Erst)Inbetriebnahme der Werkzeugmaschine oder bei der Behebung von Störungen werden sogenannte Handfunktionen eingesetzt. Dies sind bestimmte Funktionalitäten des CNC-gesteuerten Werkzeugs, welche manuell über eine Benutzerschnittstelle aufgerufen werden können und unabhängig vom Laufzeitprogramm, üblicherweise in einem speziellen Betriebsmodus ablaufen. Bei herkömmlichen automatisierten Werkzeugmaschinen sind diese Funktionalitäten (wie auch die anderen Zusatzfunktionalitäten, welche im Laufzeitprogramm aufgerufen werden können) vom Maschinenhersteller fest implementiert, insbesondere im Systemprogramm. Somit sind bei herkömmlichen Systemen Anpassungen und Erweiterungen in Bezug auf diese Handfunktionen aufwändig.

Im Rahmen der Erfindung ist es nun möglich, auch die Handfunktionen auf einfache Weise zu erweitern oder anzupassen. Dazu ist die Ausführung bestimmter der durch den Benutzer angegebenen Funktionalitäten der Komponenten der Werkstücklehre manuell auslösbar. Die Handfunktionen werden somit auf dieselbe oder eine ähnliche Weise vorgegeben wie die Funktionalitäten der Komponenten, welche während der Bearbeitungsphase ausgeführt werden sollen. Die Auslösung erfolgt dann aber nicht automatisch während der Bearbeitungsphase sondern manuell durch den Benutzer, in der Regel ausserhalb der Bearbeitungsphase. Die Funktionalitäten werden wiederum dadurch bereitgestellt, dass die entsprechenden, im Systemprogramm enthaltenen Routinen zur Ansteuerung der Ein- und Ausgänge der Schnittstelle abgearbeitet werden.

Die Definition der Funktionalitäten für die Handfunktionen kann gemeinsam mit der Angabe der gewünschten Funktionalitäten für die Bearbeitungsphase erfolgen, z. B. durch direkte Eingabe in eine Funktionsdatenbank. Dieselbe Funktion kann so gegebenenfalls sowohl als automatische Funktionalität in der Bearbeitungsphase oder als Handfunktion genutzt werden. Die Definition der Handfunktionen kann aber auch unabhängig von der Angabe der Funktionalitäten für die Bearbeitungsphase erfolgen, z. B. dann, wenn letztere in einem Grundstellungsprogramm angegeben werden, welches erst vor der Bearbeitungsphase durchlaufen wird. In diesem Fall können die Handfunktionen wie oben erwähnt durch Eingabe in eine entsprechende Datenbank oder in einem gesonderten Initialisierungsprogramm für die Handfunktionen angegeben werden, welches unabhängig vom Grundstellungs- oder Laufzeitprogramm durchlaufen wird. Die Angaben der Funktionalitäten der Handfunktionen und derjenigen für die Bearbeitungsphase können beispielsweise als gesonderte Teile eines NC-Projekts gespeichert sein, wobei beim Laden des NC-Projekts die Handfunktionen automatisch initialisiert werden.

Neben den benutzerdefinierten Handfunktionen können weiterhin im System vorgegebene Handfunktionen vorhanden sein, welche auf die gewohnte Weise aufgerufen werden.

Die Bereitstellung der Funktionalitäten durch die Systemprogrammroutinen und (zumindest teilweise) die Angabe der gewünschten Funktionalitäten erfolgt somit für die Handfunktionen und die Funktionalitäten für die Bearbeitungsphase gemeinsam und auf dieselbe oder eine ähnliche Weise. Im Prinzip sind aber auch Werkzeugmaschinen denkbar, bei welchen die vorhandene Zusatzfunktionalität lediglich für Handfunktionen vorgesehen ist, bei welchen also während der Bearbeitungsphase keine dieser zusätzlichen Funktionalitäten abarbeitbar sind.

Bevorzugt kann bei der Angabe der bestimmten Funktionalitäten für die Handfunktionen jeder dieser Funktionalitäten durch den Benutzer eine frei wählbare Identifizierung zugeordnet werden. Dabei kann es sich um einen Identifizierungstext handeln, welcher die Funktionalität kurz beschreibt, beispielsweise "Bereich 3, Unterbereich B, alle Halter öffnen". Möglich sind auch andere Identifizierungen, beispielsweise wählbare Symbole. Diese Identifizierungen erleichtern den späteren manuellen Aufruf der gewünschten Handfunktion über die Benutzerschnittstelle (z. B. eine PC-Oberfläche), indem unmittelbar und gemäss der Terminologie des Benutzers erkennbar ist, welche Aktionen eine Handfunktion beinhaltet.

Eine Steuervorrichtung für eine erfindungsgemässe Werkzeugmaschine ist derart ausgebildet,
a) dass sie ein Werkzeug während einer Bearbeitungsphase abhängig von einem durch den Benutzer veränderbaren Laufzeitprogramm steuern kann;
b) dass sie eine Schnittstelle mit einer Mehrzahl von, insbesondere digitalen, Ein- und Ausgängen durch ein Systemprogramm unabhängig vom Laufzeitprogramm kontrollieren kann, wozu das Systemprogramm eine Mehrzahl von Routinen umfasst, durch welche die Ein- und Ausgänge der Schnittstelle beliebig ansteuerbar sind; und
c) dass gewünschte Funktionalitäten der Komponenten der Werkstücklehre durch den Benutzer vor der Bearbeitungsphase angebbar sind, ohne dass dazu eine Änderung des Systemprogramms erforderlich ist, wobei während der Bearbeitungsphase jene Routinen des Systemprogramms automatisch abgearbeitet werden, welche die gewünschten Funktionalitäten bereitstellen.

Mit Vorteil durchläuft die Steuervorrichtung einmalig vor der Bearbeitungsphase ein vom Benutzer veränderbares Initialisierungsprogramm, in welchem die gewünschten Funktionalitäten der Komponenten der Werkstücklehre durch den Benutzer anwenderprogrammiert angebbar sind.

Ein Steuerungsprogrammprodukt für eine Werkzeugmaschine mit einer Schnittstelle mit einer Mehrzahl von Ein- und Ausgängen umfasst ein Steuerungsprogramm mit einer Mehrzahl von bereitgestellten Routinen, durch welche die Ein- und Ausgänge der Schnittstelle beliebig ansteuerbar sind. Die während einer Bearbeitungsphase durch Ansteuern der Ein- und Ausgänge automatisch auszuführenden Funktionen sind vorgängig durch einen Benutzer angebbar.

Bevorzugt kann das Steuerungsprogramm auf eine Tabelle zugreifen, in welcher die anzusteuernden Ein- und/oder Ausgänge sowie die für die anzusteuernden Ein- und/oder Ausgänge jeweils auszuführenden Funktionen angegeben sind. Während der Bearbeitungsphase wird diese Tabelle durch das Steuerungsprogramm laufend abgefragt, entsprechend werden die Ein- und/oder Ausgänge mit Adressen versehen und gemäss jenen Routinen angesteuert, durch welche die auszuführenden Funktionen ausgeführt werden. Die Tabelle kann beispielsweise in Registern der Steuervorrichtung der Werkzeugmaschine oder in einer Datenbank abgelegt werden.

Mit Vorteil sind die auszuführenden Funktionen in einem Grundstellungsprogramm zum Initialisieren einer Grundstellung der Werkzeugmaschine angebbar, welches vor der Bearbeitungsphase durchlaufen wird. Basierend auf dem in diesem Grundstellungsprogramm enthaltenen Initialisierungsprogramm wird dann beispielsweise die erwähnte Tabelle mit den Informationen über die anzusteuernden Ein- und/oder Ausgänge sowie über die für die anzusteuernden Ein- und/oder Ausgänge jeweils auszuführenden Funktionen versehen.

Alternativ können die Funktionen beispielsweise in einer gesonderten Datenbank angegeben und manuell oder periodisch, zwischen zwei Bearbeitungsphasen oder in Bearbeitungspausen, aktualisiert werden.

Ein Verfahren zum Betreiben einer Werkzeugmaschine umfasst folgende Schritte:
a) Bereitstellen eines Laufzeitprogramms zur Steuerung eines Werkzeugs während einer Bearbeitungsphase;
b) Angeben gewünschter Funktionalitäten für automatisch ansteuerbare Komponenten einer Werkstücklehre;
c) Vorbereiten eines Systemprogramms derart, dass während der Bearbeitungsphase im Systemprogramm vorhandene Routinen aufgerufen werden, welche die gewünschten Funktionalitäten bereitstellen;
d) Starten der Bearbeitungsphase, während welcher das Werkzeug durch das Laufzeitprogramm und die Komponenten der Werkstücklehre automatisch durch das Systemprogramm gesteuert werden.

Bevorzugt werden die gewünschten Funktionalitäten in einem Initialisierungsprogramm angegeben. Dieses wird einmalig vor der Bearbeitungsphase durchlaufen, wobei das Systemprogramm zum Aufrufen der Routinen vorbereitet wird, welche die gewünschten Funktionalitäten bereitstellen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer erfindungsgemässen Steuervorrichtung für eine Werkzeugmaschine;
- Fig. 2: eine schematische Darstellung eines mit einer erfindungsgemässen Werkzeugmaschine auszuführenden Prozessbeispiels;
- Fig. 3: ein Ablaufdiagramm der für das Prozessbeispiel benötigten Funktionalitäten;
- Fig. 4: eine schematische Darstellung der Aufteilung des Drehtischs der Werkzeugmaschine;
- Fig. 5: eine schematische Darstellung der Definition und Bereitstellung der Funktionalitäten.

Grundsätzlich sind in den Figuren gleiche Teile mit gleichen Bezugszeichen versehen.

### Wege zur Ausführung der Erfindung

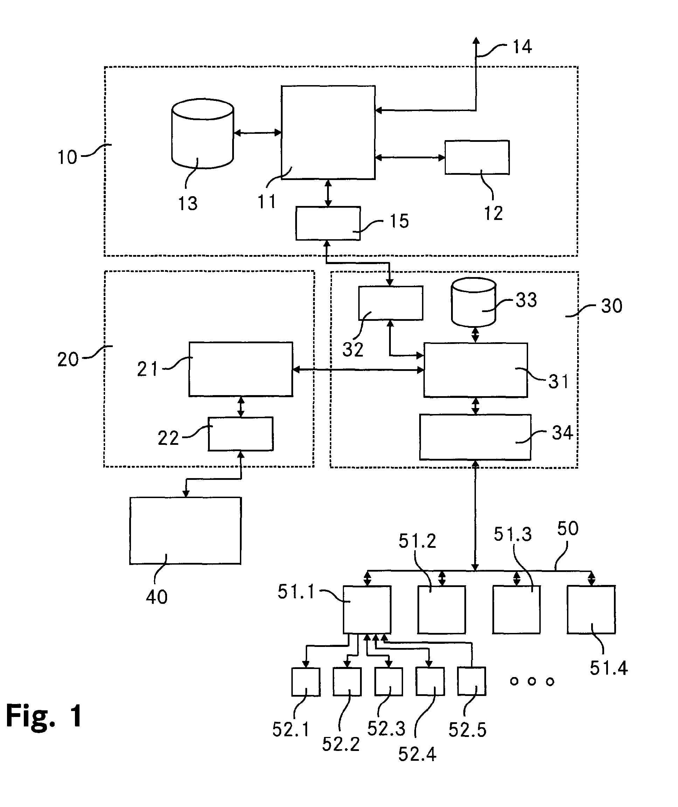

Die Figur 1 ist eine schematische Darstellung einer erfindungsgemässen Steuervorrichtung für eine Werkzeugmaschine, wobei nur die wichtigsten Komponenten dargestellt sind. Der Aufbau der Steuerung entspricht weitgehend demjenigen bekannter Steuerungen. Die Steuerung ist in drei Teile gegliedert, welche drei übereinanderliegenden Ebenen entsprechen: das Mensch-Maschinen-Interface (MMI) 10, die NC-Steuerung 20 sowie die speicherprogrammierte Steuerung (SPS) 30. Die drei Teile können hardwaremässig sowohl separat als auch gemeinsam in demselben Rechner realisiert werden. Im zweiten Fall sind die Ebenen auf Softwarestufe realisiert.

Das Mensch-Maschinen-Interface 10 umfasst einen zentralen Rechner 11, beispielsweise einen üblichen Personal Computer mit einem handelsüblichen Betriebssystem. Er ist an Ein-/Ausgabegeräte 12 gekoppelt, beispielsweise an eine Tastatur, einen Bildschirm und einen Drucker. Der zentrale Rechner 11 weist ausserdem einen Speicher 13 auf, üblicherweise zumindest einen flüchtigen Arbeitsspeicher (RAM) sowie einen nichtflüchtigen Speicher, wie ein Festplattenlaufwerk. Der zentrale Rechner 11 kann mit externen Geräten verbunden werden, beispielsweise über ein Netzwerk (LAN) 14. Schliesslich umfasst das MMI 10 eine Schnittstelle 15 zur Verbindung mit der SPS 30. Das MMI 10 dient zur Bedienung und Kontrolle der Maschinensteuerung sowie zur Datenvisualisierung. Steuerprogramme für die darunterliegende NC-Steuerung 20 und die SPS 30 werden über das MMI 10 eingegeben bzw. eingelesen. Über das MMI 10 können auch die Handfunktionen der Werkzeugmaschine definiert und aufgerufen werden.

Der Kern der NC-Steuerung 20 ist der NC-Interpreter 21, welcher die NC-Programme abarbeitet und abhängig davon das Werkzeug 40 steuert. Zwischen dem NC-Interpreter 21 und dem Werkzeug 40 ist ein Steuerrechner 22 angeordnet, welcher abhängig von den Steuerbefehlen des NC-Interpreters die Steuersignale für das Werkzeug 40 generiert. Dazu gehört beispielsweise auch das Interpolieren von Daten für die Ansteuerung der NC-Achsen.

Weiter ist die NC-Steuerung 20 an die SPS 30 mit dem SPS-Rechner 31 gekoppelt. Die SPS 30 nimmt alle Steuerungs- und Überwachungsaufgaben der Maschinenperipherie wahr. Die SPS 30 weist eine mit dem SPS-Rechner 31 verbundene Schnittstelle 32 zur Kommunikation mit dem Mensch-Maschinen-Interface 10 auf sowie einen Speicher 33, in welchem der SPS-Rechner 31 Daten ablegen und auf welchen dieser lesend zugreifen kann. Die SPS 30 weist weiter eine Schnittstelle 34 auf mit einer Mehrzahl von digitalen Ein- und Ausgängen. An diese Schnittstelle 34 sind über ein Bussystem 50 mehrere Anschlussmodule 51.1, 51.2, ..., 51.4 gekoppelt, an welche automatisch ansteuerbare Komponenten 52.1, 52.2, ..., 52.5, ... angeschlossen werden können. Diese Komponenten 52.1, 52.2, ... dienen insbesondere zum Einspannen, Positionieren und/oder Überwachen der zu bearbeitenden Werkstücke, bilden also Teile einer Werkstücklehre. Auch Zusatzwerkzeuge für die Bearbeitung der Werkstücke oder Anzeigemittel wie Lampen oder LCD-Anzeigen können an die Anschlussmodule 51.1...51.4 angeschlossen werden. Einige der Komponenten 52.1, 52.2 sind lediglich mit Ausgängen der Schnittstelle 33 verbunden, werden über diese gesteuert und bieten keine Rückmeldung. Andere Komponenten 52.3, 52.4 sind sowohl an Ein- als auch an Ausgänge angeschlossen und ermöglichen so eine Rückmeldung, beispielsweise darüber, ob die ausgelöste Operation bereits ausgeführt worden ist. Schliesslich sind auch Komponenten 52.5 wie z. B. Sensoren vorhanden, welche lediglich mit Eingängen der Schnittstelle 33 zusammenwirken. Diese Komponenten 52.5 führen Kontrolloperationen durch und melden einen bestimmten Zustand zurück.

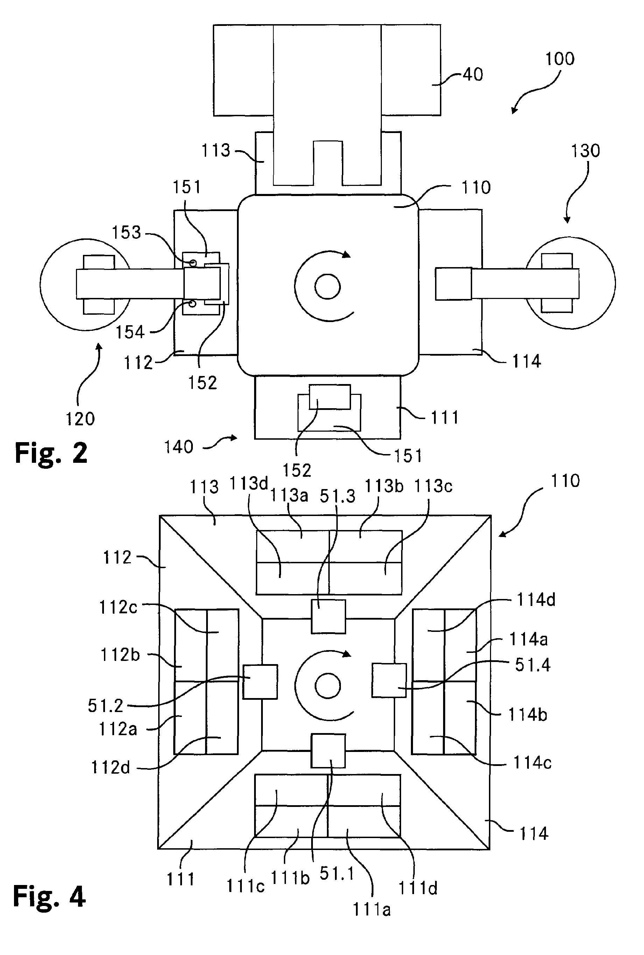

Die Figur 2 ist eine schematische Darstellung eines mit einer erfindungsgemässen Werkzeugmaschine auszuführenden Prozessbeispiels. Das Beispiel ist zugunsten der Übersichtlichkeit stark vereinfacht; die Komplexität der auszuführenden Prozesse ist in der Praxis zumeist bedeutend grösser. Trotzdem können an sich beliebig komplexe Prozesse analog zum dargestellten Beispiel behandelt werden, ohne dass der Aufwand überproportional steigt.

Die dargestellte Werkzeugmaschine 100 umfasst einen Drehtisch 110, auf welchem vier gleichartige Bereiche 111, 112, 113, 114 zum Einspannen von Werkstücken ausgebildet sind. Durch Drehen des Drehtischs 110 kann wahlweise einer der Bereiche 111...114 in den Arbeitsbereich des Werkzeugs 40, im Beispiel ein Schweisswerkzeug, gedreht werden. In der dargestellten Situation befindet sich der dritte Bereich 113 in dieser Arbeitsposition. Während der Bearbeitungsphase wird der Drehtisch 110 im Uhrzeigersinn gedreht, so dass zyklisch alle Bereiche 111...114 in den Arbeitsbereich gelangen. In Drehrichtung hinter dem Werkzeug 40 ist eine automatische Beladestation 120 fest angeordnet, welche mit demjenigen Bereich 112 zusammenwirkt, welcher auf den derzeit durch das Werkzeug 40 bearbeiteten Bereich 113 folgt. In Drehrichtung vor dem Werkzeug 40 ist eine automatische Entladestation 130 fest angeordnet. Dem Werkzeug gegenüber befindet sich schliesslich eine manuelle Einlegestation 140. Jeder der vier Bereiche 111...114 wirkt also jeweils mit einer der Stationen zusammen, ausgenommen während der Zeitspanne, in welcher der Drehtisch 110 in seine nächste Position gedreht wird.

Im Rahmen des dargestellten Beispiels sollen nun folgende Operationen durchgeführt werden:

In der manuellen Einlegestation 140 legt eine Bedienperson zwei Bleche 151, 152 in eine Werkstücklehre ein. Die Bleche 151, 152 werden in der Werkstücklehre festgehalten. Daraufhin wird der Drehtisch 110 in seine nächste Stellung gedreht, so dass der Bereich mit der automatischen Beladestation 120 zusammenwirken kann. Dort werden zwei Muttern 153, 154 automatisch in das erste Blech 151 eingelegt. Sobald die Muttern 153, 154 positioniert sind, kann der Drehtisch 110 wiederum in seine nächste Stellung gedreht werden.

Der betrachtete Bereich gelangt nun in den Arbeitsbereich des Werkzeugs 40. Hier werden die beiden Muttern 153, 154 zuerst auf das erste Blech 151 geschweisst und anschliessend die beiden Bleche 151, 152 durch eine Punktschweissung miteinander verbunden. Anschliessend wird der Drehtisch 110 wiederum in seine nächste Position gedreht. Dort wird das bearbeitete Werkstück von der automatischen Entladestation 130 aus der Werkstücklehre entnommen. Nach Abschluss der Entnahme wird der Drehtisch 110 wiederum gedreht, so dass in diesem Bereich erneut zwei Bleche manuell eingelegt werden können.

Damit dieser Arbeitsablauf realisiert werden kann, umfasst die Werkstücklehre pro Blech 151, 152 je einen Spanner mit jeweils zwei Endstellungen, welche überwacht werden können. Die Spanner dienen zum Festhalten der Bleche 151, 152. Pro Blech 151, 152 ist weiter ein Endschalter vorgesehen zur Kontrolle, ob das Blech 151, 152 vorhanden ist.

Weiter sind zwei Endschalter vorgesehen für die Anwesenheitskontrolle der eingelegten Muttern 153, 154 sowie ein Kippzylinder zum Kippen der Werkstücklehre in zwei, wiederum überwachte Endstellungen. Diese Kippbewegung ist notwendig, damit mit dem Schweisswerkzeug 40 sowohl die Muttern 153, 154 an das erste Blech 151 geschweisst als auch die zwei Bleche 151, 152 miteinander verschweisst werden können.

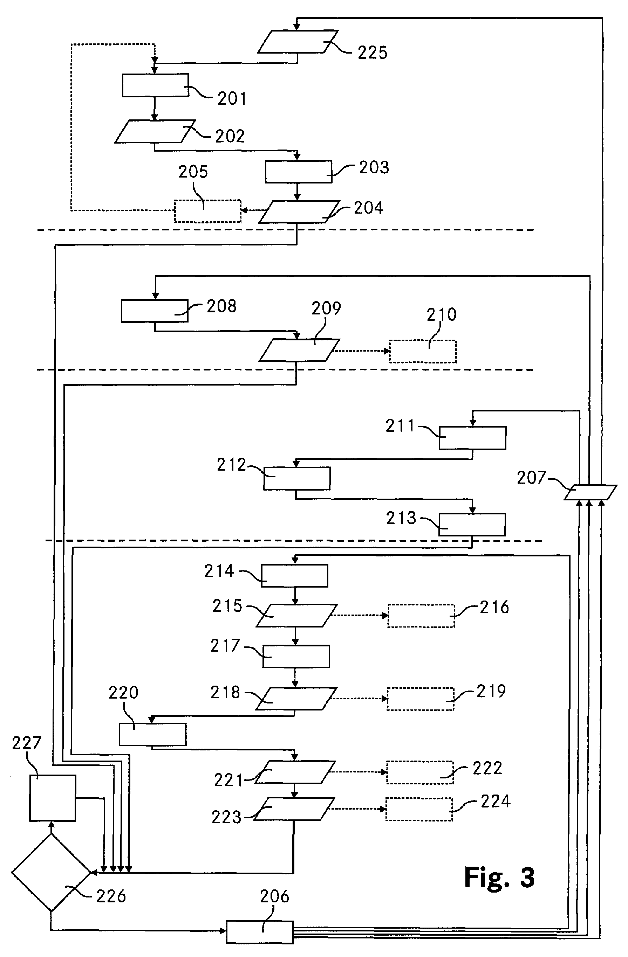

Die Figur 3 zeigt ein Ablaufdiagramm der für das Prozessbeispiel benötigten Funktionalitäten. Aktionen sind durch Rechtecke dargestellt, Abfragen und Interaktionen durch Parallelogramme. Die Operationen der Bedienperson und der mit der Werkzeugmaschine zusammenwirkenden externen Vorrichtungen (z. B. Roboter zum Be- und Entladen) sind in der linken Spalte, diejenigen der Werkstücklehre in der mittleren Spalte und diejenigen des Werkzeugs 40 in der rechten Spalte dargestellt. Die Bedienperson gibt also in der manuellen Einlegestation 140 die Bleche 151, 152 in eine in eine erste Stellung gekippte Werkstücklehre ein (Schritt 201). Sobald die Bedienperson die Bleche 151, 152 durch Betätigen eines Tasters zur Bearbeitung freigibt (Schritt 202), werden die beiden Spanner der Werkstücklehre automatisch gespannt (Schritt 203). Durch die Endschalter wird kontrolliert, ob die Spanner geschlossen sind und ob die beiden Bleche 151, 152 eingelegt sind (Schritt 204). Ist dies nicht der Fall, erfolgt eine Meldung (Schritt 205) an die Bedienperson, worauf diese den Fehler korrigieren kann, ohne dass der Verfahrensablauf in den anderen Stationen 120, 130 oder im Arbeitsbereich des Werkzeugs 40 unterbrochen wird. Eine Unterbrechung erfolgt erst nach mehrmaliger nicht erfolgreicher Kontrolle, denn dies könnte beispielsweise auf einen defekten Endschalter oder ein Problem mit der Schnittstelle hindeuten.

Sobald die Bleche 151, 152 ordnungsgemäss eingelegt und die Spanner geschlossen sind, kann der Drehtisch 110 in seine nächste Stellung gedreht werden (Schritt 206). Der Abschluss der Drehung wird überwacht (Schritt 207). Sobald die Drehung ausgeführt ist, werden die Muttern 153, 154 automatisch eingelegt (Schritt 208) und deren Anwesenheit durch die entsprechenden Endschalter überprüft (Schritt 209). Falls die Muttern 153, 154 nicht vorhanden sind, wird eine entsprechende Meldung angezeigt (Schritt 210) und der Verfahrensablauf unterbrochen.

Ist das Ergebnis der Überprüfung positiv, kann die nächste Drehbewegung (Schritt 206) erfolgen, deren Abschluss wiederum überwacht wird (Schritt 207). Im Arbeitsbereich des Schweisswerkzeugs 40 werden zunächst die Muttern 153, 154 auf das erste Blech 151 geschweisst (Schritt 211). Daraufhin wird die Werkstücklehre mittels des Kippzylinders in ihre zweite Stellung gekippt (Schritt 212), so dass die beiden Bleche 151, 152 durch eine Punktschweissung miteinander verbunden werden können (Schritt 213). Sobald dies ausgeführt worden ist, kann der Drehtisch 110 wiederum gedreht werden (Schritt 206). Bereits während der Drehbewegung wird die Werkstücklehre durch den Kippzylinder wieder zurück in die erste Stellung gekippt (Schritt 214), für diese Operation wird der Abschluss der Drehbewegung also nicht abgewartet. Dadurch kann die Verfahrenseffizienz gesteigert werden, insbesondere dann, wenn die Bearbeitung durch das Werkzeug 40 mehr Zeit benötigt als die Operationen bei den drei Stationen 120, 130, 140.

In der letzten Position wird zunächst die korrekte Endstellung des Kippzylinders kontrolliert (Schritt 215), worauf alle Spanner der Werkstücklehre geöffnet werden (Schritt 217). Ob die Spanner geöffnet sind, wird wiederum durch die Endschalter überprüft (Schritt 218). Sobald alle Spanner geöffnet sind, kann der Entladevorgang stattfinden (Schritt 220). Das korrekte Entladen wird wiederum durch die Endschalter für die Bleche 151, 152 überprüft (Schritt 221). Nach einer erneuten Prüfung, ob die Spanner noch immer geöffnet sind, dass also die Voraussetzungen für ein erneutes manuelles Beladen gegeben sind (Schritt 223), kann der Drehtisch 110 wieder in seine Ausgangsstellung gedreht werden (Schritt 206). Dort wird nach Abschluss der Drehbewegung geprüft, ob sich die Werkstücklehre in der richtigen Kippstellung befindet (Schritt 225), so dass sich der nächste Verfahrenszyklus anschliessen kann. Bei sämtlichen Überprüfungen im Rahmen der automatischen Entladestation 130 erfolgt bei negativem Ergebnis eine entsprechende Meldung (Schritte 216, 219, 222, 224), worauf der Verfahrensablauf bis zur Behebung des Fehlers unterbrochen wird.

Weil die vier Bereiche 111...114 parallel bearbeitet werden, kann die Drehbewegung in die nächste Position jeweils erst dann erfolgen, wenn die auszuführenden Operationen in sämtlichen Bereichen 111...114 abgeschlossen sind. Der Abschluss der Operationen wird regelmässig überprüft (Schritt 226). Sind noch nicht alle Bereiche bereit, erfolgt nach einer kurzen Zeitverzögerung (Schritt 227) eine erneute Überprüfung.

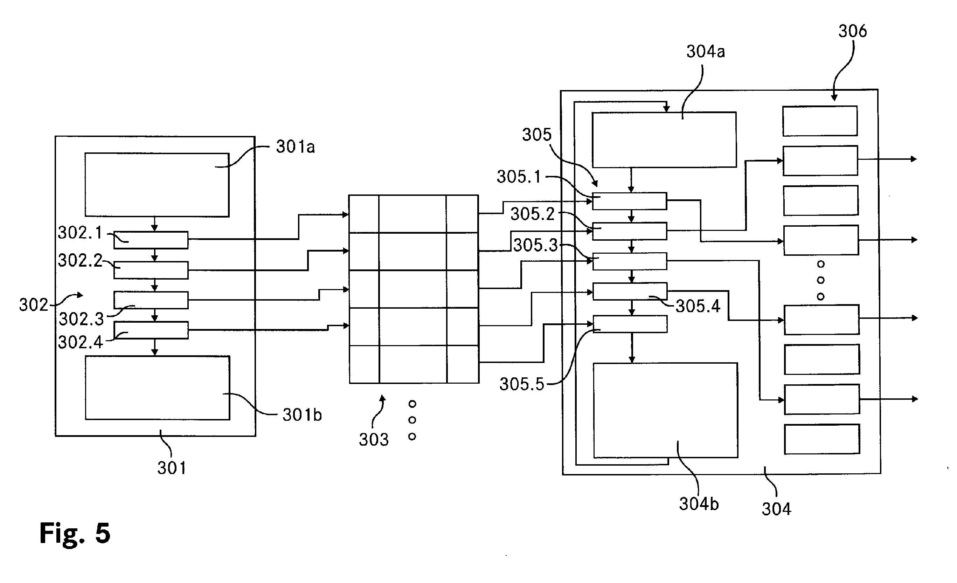

Die Figur 4 ist eine schematische Darstellung der Aufteilung des Drehtischs der Werkzeugmaschine. Jeder der vier Bereiche 111, 112, 113, 114 des Drehtischs 110 weist vier Unterbereiche 111a, 111 b, 111 c, 111 d, ... auf. Die Anschlüsse der Anschlussmodule 51.1...51.4 sind jeweils einem der Bereiche 111, 112, 113, 114 oder einem der Unterbereiche 111 a, 111 b, 111 c, 111 d, ... zugeordnet. Im dargestellten Beispiel sind jedem Bereich direkt vier Eingänge und vier Ausgänge zugeordnet, jedem Unterbereich acht Eingänge und acht Ausgänge für Spanner und Kippzylinder sowie zwölf Eingänge für die Kontrolle der Teileanwesenheit. Der Drehtisch 110 weist schliesslich noch vier feste Sensoren zur Kontrolle der Drehtischstellung auf.

Die Werkstücklehre des dargestellten Prozessbeispiels weist bezüglich der Ein- und Ausgänge nun für jeden der vier Bereiche 111, 112, 113, 114 folgende Konfiguration auf:

| Bezeichnung | Funktion | Aktor / Sensor | WL Ausgang | WL Eingang |
|---|---|---|---|---|
| Spanner 1 | vor | A / S | ML31 / 1 | ML32 / 1 |
| Spanner 1 | zurück | A / S | ML31 / 2 | ML32 / 2 |
| Spanner 2 | vor | A / S | ML31 / 3 | ML32 / 3 |
| Spanner 2 | zurück | A / S | ML31 / 4 | ML32 / 4 |
| Blech 1 | Anwesenheit | S | | ML33 / 1 |
| Blech 2 | Anwesenheit | S | | ML33 / 2 |
| Mutter 1 | Anwesenheit | S | | ML33 / 3 |
| Mutter 2 | Anwesenheit | S | | ML33 / 4 |
| Kippen | Stellung 1 | A / S | ML31 / 5 | ML32 / 5 |
| Kippen | Stellung 2 | A /S | ML31 / 6 | ML32 / 6 |

Wegen der geringen Anzahl der benötigten Ein- und Ausgänge reichen zur Realisierung des einfachen Prozessbeispiels die einem einzigen Unterbereich zugeordneten Ein- und Ausgänge aus. Die dem Bereich als Ganzes zugeordneten Ein- und Ausgänge werden primär für Sonderfunktionen genutzt, beispielsweise für den Anschluss von Schaltern oder Tastern zur Bedienung durch eine Bedienperson, beispielsweise für den Taster zum Quittieren des Einlegevorgangs in der manuellen Einlegestation 140.

Die Figur 5 ist eine schematische Darstellung der Definition und Bereitstellung der Funktionalitäten. Die gewünschten Funktionalitäten werden in einem Grundstellungsprogramm 301 definiert. Das Grundstellungsprogramm 301 bestimmt, wie die Werkzeugmaschine in eine vorgegebene Grundstellung verfahren wird, damit anschliessend die Bearbeitungsphase eingeleitet werden kann. Dazu enthält es Programmteile 301 a, 301 b. In das Grundstellungsprogramm ist ein Initialisierungsabschnitt 302 eingefügt, durch welchen die Funktionalitäten der automatisch ansteuerbaren Komponenten der Werkstücklehre definiert werden. Der Initialisierungsabschnitt 302 umfasst eine Reihe von Anweisungen 302.1, 302.2, 302.3, 302.4, durch welche die anzusteuernden Ausgänge bzw. Eingänge, die gewünschten Funktionalitäten sowie deren Ausführungszeitpunkt vorgegeben werden. Beim einmaligen Durchlaufen des Grundstellungsprogramms 301 vor Beginn der Bearbeitungsphase werden diese Parameter in einer Tabelle 303 abgelegt. Diese ist im Speicher 33 der SPS 30 abgelegt (vergleiche Fig. 1), auf dessen Inhalt der SPS-Rechner 31 und damit das SPS-Systemprogramm 304 zugreifen kann.

Das SPS-Systemprogramm 304 wird während der Bearbeitungsphase zyklisch abgearbeitet und umfasst neben den SPS-üblichen Programmteilen 304a, 304b einen Abschnitt 305 mit Anweisungen 305.1, 305.2, 305.3, 305.4, 305.5. Diese lesen jeweils den Inhalt der Tabelle 303 in Bezug auf eine Funktionalität aus, bestimmen aufgrund von Systemvariablen, ob eine Aktion notwendig ist und rufen gegebenenfalls eine der vordefinierten, im Systemprogramm enthaltenen Routinen 306 auf. Diese stellt die gewünschte Funktionalität bereit, indem sie die Aus- oder Eingänge der Schnittstelle entsprechend ansteuert. Wird das Ende der Tabelle 303 erreicht, wird die Kontrolle wieder an den folgenden Programmteil 304b des SPS-Systemprogramms 304 übergeben. Die SPS 30 führt eine Plausibilitätsprüfung der Inhalte der Tabelle 303 durch, verhindert die Ausführung von unzulässigen, d. h. unmöglichen oder nicht ausführbaren, Funktionalitäten und meldet via NC-Steuerung die Unzulässigkeit der Angabe zurück.

Neue benutzerspezifische Handfunktionen werden über das MMI 10 eingegeben oder im Rahmen eines NC-Projekts über die Netzverbindung 14 oder mittels Datenträger eingelesen. Die Vorgabe der anzusteuernden Ausgänge bzw. Eingänge sowie der gewünschten Funktionalitäten kann in einem gesonderten Programm in der Form von Anweisungen erfolgen, oder die Benutzerschnittstelle umfasst eine grafische Oberfläche, welche die einfache Auswahl der anzusteuernden Aus- bzw. Eingänge der auszuführenden Funktionalitäten (z. B. Setzen, Zurückstellen oder Abfragen von 1/0-Zuständen) ermöglicht, z. B. mittels Maus- oder Trackballbedienung. Zu jeder Handfunktion wird ein Identifizierungstext eingegeben, welcher beispielsweise die betroffene Komponente, deren Ort in der Werkzeugmaschine und die ausgeführte Funktion bezeichnet. Die eingegebenen oder eingelesenen Informationen werden als Teil des aktuellen NC-Projekts über die Schnittstellen 15, 32 und den SPS-Rechner 31 im Speicher 33 der SPS 30 abgelegt. Die Informationen können unmittelbar in einem gesonderten Teil der Tabelle 303 im Speicher 33 der SPS 30 abgelegt werden, oder dieser Teil der Tabelle 303 wird erst nach dem Aufrufen einer entsprechenden Routine mit den neuen Informationen aktualisiert. Das eigentliche NC-Programm als Teil des NC-Projekts wird vom SPS-Rechner 31 weiter an die NC-Steuerung 20 übertragen.

Ausserhalb der Bearbeitungsphase wird ein entsprechender Abschnitt des SPS-Systemprogramms 304 zyklisch abgearbeitet. Dieser liest laufend den erwähnten gesonderten Teil der Tabelle 303 aus, bestimmt wiederum aufgrund von Systemvariablen, ob eine Aktion notwendig ist und ruft gegebenenfalls eine der vordefinierten, im Systemprogramm enthaltenen Routinen 306 zur Ansteuerung der Ein- und Ausgänge der Schnittstelle 33 auf. Die entsprechenden Systemvariablen werden in diesem Betriebsmodus primär durch die Auswahl einer auszuführenden Handfunktion über das MMI 10 (oder ein anderes Eingabemittel) via die Schnittstellen 15, 32 gesetzt. Diese Auswahl wird dadurch erleichtert, dass auf der Benutzeroberfläche die vorgängig vom Benutzer eingegebenen Identifizierungstexte angezeigt werden.

Die vom Systemprogramm 304 aufgerufene Routine 306 stellt wiederum die gewünschte Funktionalität bereit, indem sie die Aus- oder Eingänge der Schnittstelle 33 entsprechend ansteuert. Auch hier führt die SPS 30 eine Plausibilitätsprüfung der Inhalte des gesonderten Teils der Tabelle 303 durch, verhindert die Ausführung von unzulässigen, d. h. unmöglichen oder nicht ausführbaren, Funktionalitäten und meldet via MMI 10 die Unzulässigkeit der Angabe zurück.

Die im dargestellten Prozessbeispiel gewünschte Funktionalität während der Bearbeitungsphase kann beispielsweise durch folgenden Initialisierungsabschnitt 302 im Grundstellungsprogramm 301 definiert werden (nicht zu verarbeitende Kommentare stehen in Klammern):

| (Station 1 beladen von Hand) | |
|---|---|
| ( tt87654321) | |
| ML32=0000210000 | (Kippen auf Stellung 1 prüfen) |
| ML41=1 | (Unterbereich 1) |
| ML43=1 | (Station 1) |
| M191 | (automatische Funktion nach Eindrehen des Drehtischs in die angegebene Station) |
| | |
| ML31=0000002121 | (Spanner 1+2 schliessen) |
| ML32=1500002121 | (Spanner 1+2 auf geschlossen prüfen, erlaubte Zeit max. 1.5s) |
| ML33=0000000033 | (Teileanwesenheit Blech 1+2 auf Anwesenheit prüfen, korrigierbar) |
| ML41=1 | (Unterbereich 1) |
| ML43=1 | (Station 1) |
| M194 | (Funktion nach Betätigen eines Schalters durch die Bedienperson) |

| (Station 2 automatisch beladen mit Roboter) | |
|---|---|
| ( tt87654321) | |
| ML33=0000001100 | (Muttern 1+2 werden auf Anwesenheit geprüft, nicht korrigierbar) |
| ML41=1 | (Unterbereich 1) |
| ML43=2 | (Station 2) |
| M192 | (automatische Funktion vor Ausdrehen des Drehtischs in die nächste Station) |

| (Station 3 Fügen) | |
|---|---|
| ( tt87654321) | |
| ML31=0000210000 | (Kippen zurück in Stellung 1 nach CNC-Programm) |
| ML41=1 | (Unterbereich 1) |
| ML43=3 | (Station 3) |
| M193 | (automatische Funktion vor oder während Ausdrehen des Drehtischs in die nächste Station) |

| (Station 4 entladen mit Roboter) | |
|---|---|
| ( tt87654321) | |
| ML32=1500210000 | (Kippendlage 1 prüfen, erlaubte Zeit max. 1.5s) |
| ML31=0000001212 | (Spanner 1+2 öffnen) |
| ML32=1500001212 | (Spanner 1+2 auf offen prüfen, erlaubte Zeit max. 1.5s) |
| ML41=1 | (Unterbereich 1) |
| ML43=4 | (Station 4) |
| M191 | (automatische Funktion nach Eindrehen des Drehtischs in die angegebene Station) |
| | |
| ML33=0000002222 | (Teileanwesenheit Blech 1+2 und Mutter 1+2 auf Nichtanwesenheit prüfen, nicht korrigierbar) |
| ML32=0000001212 | (Spanner 1+2 auf offen prüfen) |
| ML41=1 | (Unterbereich 1) |
| ML43=4 | (Station 4) |
| M192 | (automatische Funktion vor Ausdrehen des Drehtischs in die nächste Station) |

Das Kippen der Werkstücklehre zwischen den zwei Schweissvorgängen wird direkt aus dem NC-Laufzeitprogramm aufgerufen. Dadurch kann eine einfache Synchronisierung der Arbeitsoperationen des Werkzeugs mit den Operationen der Werkstücklehre erfolgen. Dazu werden in das NC-Laufzeitprogramm nach den Anweisungen für das Anschweissen der Muttern folgende Anweisungen eingefügt:

| (Kippvorrichtung in Stellung 2 kippen vor Punktschweissen der Bleche) | |
|---|---|
| ( tt87654321) | |
| ML31=0000120000 | (Kippen in Stellung 2) |
| ML32=1500120000 | (Kippendlage prüfen, erlaubte Zeit max. 1.5s) |
| ML41=1 | (Unterbereich 1) |
| M190 | (Befehle ausführen) |

Die Station muss hier nicht angegeben werden, weil sich aus dem NC-Programm lediglich die Komponenten des Bereichs ansprechen lassen, welcher sich gerade im Arbeitsbereich des Werkzeugs befindet.

Die Befehle haben im angegebenen Beispiel die folgende Syntax und Bedeutung:

| **Befehl / Syntax** | **Beschreibung** | | |
|---|---|---|---|
| ML31=ttabcdefgh | Definition des Verhaltens der 8 Ausgänge eines Unterbereichs | tt: nicht benutzt a: Ausgang 8 b: Ausgang 7 c: Ausgang 6 d: Ausgang 5 e: Ausgang 4 f: Ausgang 3 g: Ausgang 2 h: Ausgang 1 | Werte für a-h: 0 = Ausgang wird nicht verändert 1 = Ausgang wird auf 1 gesetzt (ein) 2 = Ausgang wird auf 0 gesetzt (aus) |
| ML32=ttabcdefgh | Definition des Verhaltens der Eingänge 1-8 eines Unterbereichs | tt: erlaubte Zeit für Prüfung (in 1 / 10 s) a: Eingang 8 b: Eingang 7 c: Eingang 6 d: Eingang 5 e: Eingang 4 f: Eingang 3 g: Eingang 2 h: Eingang 1 | Werte für a-h 0 = Eingang wird nicht geprüft 1 = Eingang wird auf 1 (ein) geprüft 2 = Eingang wird auf 0 (aus) geprüft 3 = Eingang wird auf 1 (ein) geprüft, mit Korrektur-möglichkeit 4 = Eingang wird auf 0 (aus) geprüft, mit Korrektur-möglichkeit |
| ML33=ttabcdef | Definition des Verhaltens der Eingänge 9-14 eines Unterbereichs | analog ML32 | wie ML32 |
| ML34=ttabcdef | Definition des Verhaltens der Eingänge 15-20 eines Unterbereichs | analog ML32 | wie ML32 |
| ML41=x | Wahl des Unterbereichs | x = Unterbereichsnummer (falls x=0 erhalten alle Bereiche dieselbe Konfiguration) | |
| ML43=y | Wahl der Station | y = Stationsnummer (falls y=0 erhalten alle Stationen dieselbe Konfiguration) Diese Angabe ist nicht notwendig beim Aufruf im Laufzeitprogramm. | |
| M 190 (Laufzeit) | Funktionen im Laufzeitprogramm unmittelbar ausführen | | |
| M 191 (Initialisierung) | Funktionalität übernehmen; automatische Ausführung nach Eindrehen des Drehtischs in die angegebene Station | | |
| M 192 (Initialisierung) | Funktionalität übernehmen; automatische Ausführung vor dem Ausdrehen des Drehtischs aus der angegebenen Station | | |
| M 193 (Initialisierung) | Funktionalität übernehmen; automatische Ausführung vor oder während dem Ausdrehen des Drehtischs aus der angegebenen Station | | |
| M 194 (Initialisierung) | Funktionalität übernehmen; Ausführen nach Betätigen eines Schalters 1 | | |
| M 195 (Initialisierung) | Funktionalität übernehmen; Ausführen nach Betätigen eines Schalters 2 | | |
| M 196 (Initialisierung) | Funktionalität übernehmen; Ausführen nach Betätigung einer Taste "Werkstücklehre-Grundstellung" | | |

Mit dem angegebenen Initialisierungsprogramm und dem zusätzlichen Abschnitt des Laufzeitprogramms werden also auf einfache Weise sämtliche gewünschten Funktionalitäten verfügbar gemacht. Durch die Parameterübergaben werden die gewünschten Funktionen definiert. Durch die Befehle M 191-M 196 wird bestimmt, wann sie ausgeführt werden sollen. Im dargestellten Beispiel sind die Werkstücklehren sämtlicher Bereiche identisch aufgebaut, es erübrigt sich deshalb, auch noch den Bereich zu spezifizieren. Eine entsprechende zusätzliche Option kann aber auf einfachste Weise durch Setzen einer zusätzlichen Variable verfügbar gemacht werden. Durch die Angabe des Unterbereichs werden die anzusteuernden Ein- und Ausgänge bestimmt, durch die Angabe der Station wird den unterschiedlichen Bearbeitungsschritten Rechnung getragen.

Mit dem Befehl M 190 wird der im Laufzeitprogramm verfügbare NC-Befehlssatz auf einfache Weise durch eine Vielzahl zusätzlicher Befehle erweitert, welche eine flexible Ansteuerung der automatischen Komponenten erlauben. Zur Ausführung dieser zusätzlichen Befehle aus dem Laufzeitprogramm übermittelt der NC-Interpreter 22 die Parameterangaben unmittelbar an den SPS-Rechner 31, wo diese unmittelbar, ansonsten aber auf dieselbe Weise wie für die in der Tabelle 303 gespeicherten automatischen Funktionalitäten, verarbeitet werden.

Der Umfang und die Syntax der verfügbaren Befehle sowie die Struktur der angegebenen Programmabschnitte sollen lediglich als Beispiel dienen. Die Erfindung kann auch auf andere Weise realisiert werden, insbesondere dann, wenn die Initialisierung nicht in einem Grundstellungsprogramm auf NC-Ebene stattfindet.

In den Bereichen der Werkzeugmaschine können zusätzlich zu den automatisch ansteuerbaren Komponenten der Werkstücklehre auch Zusatzwerkzeuge angeordnet werden, beispielsweise um zusätzliche Füge- oder andere Bearbeitungsschritte auszuführen. Diese Zusatzwerkzeuge werden auf dieselbe Weise gesteuert und kontrolliert wie die Komponenten der Werkstücklehre.

Zusammenfassend ist festzustellen, dass durch die Erfindung eine Werkzeugmaschine geschaffen wird, welche eine flexible und einfach anpassbare automatische Steuerung von Zusatzfunktionen, insbesondere im Bezug auf das Einspannen, Positionieren oder Überwachen der Werkstücke, ermöglicht.

## Patentansprüche

1. Werkzeugmaschine umfassend
a) ein Werkzeug (40), insbesondere ein Schweiss- oder anderes Fügewerkzeug, zum sequenziellen Bearbeiten von Werkstücken während einer Bearbeitungsphase;
b) eine Schnittstelle (34) mit einer Mehrzahl von, insbesondere digitalen, Ein- und Ausgängen;
c) eine Steuerung (10, 20, 30) zum Steuern des Werkzeugs (40) während der Bearbeitungsphase, abhängig von einem durch den Benutzer veränderbaren Laufzeitprogramm;
**dadurch gekennzeichnet**,
d) dass die Werkzeugmaschine eine Werkstücklehre umfasst mit automatisch ansteuerbaren Komponenten (52.1, 52.2, 52.3, 52.4, 52.5), welche an die Schnittstelle (34) anschliessbar sind, wobei mittels der Werkstücklehre in einem Bereich (111, 112, 113, 114) der Werkzeugmaschine befindliche Werkstücke eingespannt und/oder positioniert und/oder überwacht werden können;
e) dass die Steuerung (10, 20, 30) derart ausgebildet ist, dass sie die Schnittstelle (34) durch ein Systemprogramm (304) unabhängig vom Laufzeitprogramm kontrollieren kann, wozu das Systemprogramm (304) eine Mehrzahl von vorgegebenen Routinen (306) umfasst, durch welche die Ein- und Ausgänge der Schnittstelle (34) beliebig ansteuerbar sind; und
f) dass die Steuerung (10, 20, 30) derart ausgebildet ist, dass gewünschte Funktionalitäten der Komponenten (52.1, 52.2, 52.3, 52.4, 52.5) der Werkstücklehre durch den Benutzer vor der Bearbeitungsphase angebbar sind, ohne dass dazu eine Änderung des Systemprogramms (304) erforderlich ist, wobei während der Bearbeitungsphase jene Routinen (306) des Systemprogramms (304) automatisch abgearbeitet werden, welche die gewünschten Funktionalitäten bereitstellen.

2. Werkzeugmaschine nach Anspruch 1, **dadurch gekennzeichnet, dass** die Steuerung (10, 20, 30) derart ausgebildet ist, dass sie einmalig vor der Bearbeitungsphase ein vom Benutzer veränderbares Initialisierungsprogramm (302) durchläuft und dass die gewünschten Funktionalitäten der Komponenten (52.1, 52.2, 52.3, 52.4, 52.5) der Werkstücklehre durch den Benutzer im Initialisierungsprogramm (301) angebbar sind.

3. Werkzeugmaschine nach Anspruch 2, **dadurch gekennzeichnet, dass** das Initialisierungsprogramm (302) in einem Grundstellungsprogramm (301) zum Initialisieren einer Grundstellung der Werkzeugmaschine vorgegeben wird.

4. Werkzeugmaschine nach Anspruch 2 oder 3, **dadurch gekennzeichnet, dass** die Steuerung (10, 20, 30) derart ausgebildet ist, dass die gewünschten Funktionalitäten der Komponenten (52.1, 52.2, 52.3, 52.4, 52.5) mittels Parameterangaben im Initialisierungsprogramm (302) angebbar sind und dass das Systemprogramm (304) Routinen (306) zum Bereitstellen der Funktionalität für jede zulässige Parameterkombination umfasst.

5. Werkzeugmaschine nach einem der Ansprüche 2 bis 4, **dadurch gekennzeichnet, dass** das Systemprogramm (304) auf SPS-Basis und das Laufzeitprogramm sowie das Initialisierungsprogramm (302) auf NC-Basis funktionieren, wobei ein NC-Befehlssatz zum Angeben der gewünschten Funktionalitäten erweitert ist.

6. Werkzeugmaschine nach einem der Ansprüche 1 bis 5, **dadurch gekennzeichnet, dass** eine der möglichen Funktionalitäten eine mehrstufige Abfolge von Operationen der automatisch ansteuerbaren Komponenten (52.1, 52.2, 52.3, 52.4, 52.5) der Werkstücklehre umfasst.

7. Werkzeugmaschine nach einem der Ansprüche 1 bis 6, **gekennzeichnet durch** 'eine Mehrzahl von Bereichen (111, 112, 113, 114) zum Einspannen und/oder Positionieren der Werkstücke, welche wahlweise in einem Arbeitsbereich des Werkzeugs (40) positionierbar sind.

8. Werkzeugmaschine nach Anspruch 7, **dadurch gekennzeichnet, dass** die Steuerung (10, 20, 30) derart ausgebildet ist, dass für jede Funktion der gewünschten Funktionalitäten angebbar ist, ob sie nach einem Positionieren eines betroffenen Bereichs (111, 112, 113, 114) in einer bestimmten Position, vor einem Bewegen in eine andere Position, nach einer manuellen Aktion einer Bedienperson oder als Folge eines externen Auslöseimpulses durchgeführt werden soll.

9. Werkzeugmaschine nach Anspruch 7 oder 8, **dadurch gekennzeichnet, dass** für Einspann- und/oder Positionier- und/oder Überwachungsfunktionen im Zusammenhang mit der Bearbeitung eines der Werkstücke durch das Werkzeug (40) die Routinen (306) zum Ansteuern der Ein- und Ausgänge der beteiligten Komponenten (52.1, 52.2, 52.3, 52.4, 52.5) der Werkstücklehre auch im Laufzeitprogramm aufrufbar sind.

10. Werkzeugmaschine nach einem der Ansprüche 7 bis 9, **dadurch gekennzeichnet, dass** zumindest einer der Bereiche (111, 112, 113, 114) in mehrere Unterbereiche (111a, 111 b, 111 c, 111 d, ...) aufgeteilt ist, wobei dem Bereich (111, 112, 113, 114) und jedem Unterbereich (111a, 111 b, 111 c, 111 d, ...) je mehrere Ein- und/oder Ausgänge der Schnittstelle (34) zugeordnet sind.

11. Werkzeugmaschine nach einem der Ansprüche 7 bis 10, **gekennzeichnet durch** einen drehbaren Tisch (110), auf welchem die Bereiche (111, 112, 113, 114) ausgebildet sind.

12. Werkzeugmaschine nach einem der Ansprüche 1 bis 11, **dadurch gekennzeichnet, dass** die Schnittstelle (34) und die Steuerung (10, 20, 30) derart ausgebildet sind, dass vom Werkzeug (40) unabhängige, im Bereich (111, 112, 113, 114) zum Einspannen und/oder Positionieren und/oder Überwachen der Werkstücke angeordnete Zusatzwerkzeuge zum Bearbeiten der Werkstücke anschliess- und steuerbar sind.

13. Werkzeugmaschine nach einem der Ansprüche 1 bis 12, **dadurch gekennzeichnet, dass** die Schnittstelle (34) ein Bussystem (50) zum Bereitstellen der Ein- und Ausgänge umfasst.

14. Werkzeugmaschine nach einem der Ansprüche 1 bis 13, **dadurch gekennzeichnet, dass** das Systemprogramm (304) Routinen (306) umfasst, welche eine Überwachung eines Zustands einer der Komponenten (52.3, 52.4, 52.5) der Werkstücklehre auslösen, wobei ein steuerungsmässig nicht zulässiger Zustand durch eine Bedienperson korrigierbar ist, so dass anschliessend das Systemprogramm (304) für die betroffene Funktionalität fortgesetzt werden kann.

15. Werkzeugmaschine nach einem der Ansprüche 1 bis 14, **dadurch gekennzeichnet, dass** eine Ausführung bestimmter der durch den Benutzer angebbaren Funktionalitäten der Komponenten (52.1, 52.2, 52.3, 52.4, 52.5) der Werkstücklehre manuell auslösbar ist.

16. Werkzeugmaschine nach Anspruch 15, **dadurch gekennzeichnet, dass** bei der Angabe der bestimmten Funktionalitäten jeder dieser Funktionalitäten durch den Benutzer eine frei wählbare Identifizierung, insbesondere ein Identifizierungstext, zugeordnet werden kann.

17. Steuervorrichtung für eine Werkzeugmaschine nach einem der Ansprüche 1 bis 16, welche derart ausgebildet ist,
a) dass sie ein Werkzeug (40) während einer Bearbeitungsphase abhängig von einem durch den Benutzer veränderbaren Laufzeitprogramm steuern kann;
b) dass sie eine Schnittstelle (34) mit einer Mehrzahl von, insbesondere digitalen, Ein- und Ausgängen durch ein Systemprogramm (304) unabhängig vom Laufzeitprogramm kontrollieren kann, wozu das Systemprogramm (304) eine Mehrzahl von Routinen (306) umfasst, durch welche die Ein- und Ausgänge der Schnittstelle (34) beliebig ansteuerbar sind; und
c) dass gewünschte Funktionalitäten von Komponenten (52.1, 52.2, 52.3, 52.4, 52.5) einer Werkstücklehre durch den Benutzer vor der Bearbeitungsphase angebbar sind, ohne dass dazu eine Änderung des Systemprogramms (304) erforderlich ist, wobei während der Bearbeitungsphase jene Routinen (306) des Systemprogramms (304) automatisch abgearbeitet werden, welche die gewünschten Funktionalitäten bereitstellen.

18. Steuervorrichtung nach Anspruch 17, welche derart ausgebildet ist, dass sie einmalig vor der Bearbeitungsphase ein vom Benutzer veränderbares Initialisierungsprogramm (302) durchläuft, in welchem die gewünschten Funktionalitäten der Komponenten (52.1, 52.2, 52.3, 52.4, 52.5) der Werkstücklehre durch den Benutzer anwenderprogrammiert angebbar sind.

19. Steuerungsprogrammprodukt für eine Werkzeugmaschine insbesondere nach einem der Ansprüche 1 bis 16 mit einer Schnittstelle (34) mit einer Mehrzahl von Ein- und Ausgängen, wobei das Steuerungsprogrammprodukt ein Steuerungsprogramm (304) mit einer Mehrzahl von bereitgestellten Routinen (306) umfasst, durch welche die Ein- und Ausgänge der Schnittstelle (34) beliebig ansteuerbar sind, wobei die während einer Bearbeitungsphase durch Ansteuern der Ein- und Ausgänge automatisch auszuführenden Funktionen vorgängig durch einen Benutzer angebbar sind.

20. Steuerungsprogrammprodukt nach Anspruch 19, **dadurch gekennzeichnet, dass** das Steuerungsprogramm (304) auf eine Tabelle (303) zugreifen kann, in welcher die anzusteuernden Ein- und/oder Ausgänge sowie die für die anzusteuernden Ein- und/oder Ausgänge jeweils auszuführenden Funktionen angegeben sind, wobei das Steuerungsprogramm (304) während der Bearbeitungsphase laufend die Tabelle (303) abfragt, die Ein- und/oder Ausgänge mit Adressen versieht und sie gemäss jenen Routinen (306) ansteuert, durch welche die auszuführenden Funktionen ausgeführt werden.

21. Steuerungsprogrammprodukt nach Anspruch 19 oder 20, **dadurch gekennzeichnet, dass** die auszuführenden Funktionen in einem Grundstellungsprogramm (301) zum Initialisieren einer Grundstellung der Werkzeugmaschine angebbar sind, welches vor der Bearbeitungsphase einmalig durchlaufen wird.

22. Verfahren zum Betreiben einer Werkzeugmaschine insbesondere nach einem der Ansprüche 1 bis 16, **gekennzeichnet durch** folgende Schritte:
a) Bereitstellen eines Laufzeitprogramms zur Steuerung eines Werkzeugs (40) während einer Bearbeitungsphase;
b) Angeben gewünschter Funktionalitäten für automatisch ansteuerbare Komponenten (52.1, 52.2, 52.3, 52.4, 52.5) einer Werkstücklehre;
c) Vorbereiten eines Systemprogramms (304) derart, dass während der Bearbeitungsphase im Systemprogramm (304) vorhandene Routinen (306) aufgerufen werden, welche die gewünschten Funktionalitäten bereitstellen;
d) Starten der Bearbeitungsphase, während welcher das Werkzeug (40) **durch** das Laufzeitprogramm und die Komponenten (52.1, 52.2, 52.3, 52.4, 52.5) der Werkstücklehre automatisch **durch** das Systemprogramm (304) gesteuert werden.

23. Verfahren nach Anspruch 22, **dadurch gekennzeichnet, dass** die gewünschten Funktionalitäten in einem Initialisierungsprogramm (302) angegeben werden und dass das Initialisierungsprogramm (302) einmalig vor der Bearbeitungsphase durchlaufen wird, wobei das Systemprogramm (304) zum Aufrufen der Routinen (306) vorbereitet wird, welche die gewünschten Funktionalitäten bereitstellen.
